Europäisches Patentamt

European Patent Office

Office européen des brevets

(11) Publication number: **0 133 788**
**B1**

(12) **EUROPEAN PATENT SPECIFICATION**

(45) Date of publication of patent specification: **19.10.88**

(21) Application number: **84305170.7**

(22) Date of filing: **30.07.84**

(51) Int. Cl.⁴: **G 02 B 3/00**

(54) **Integral optical device and method.**

(30) Priority: **04.08.83 US 520456**

(43) Date of publication of application:
**06.03.85 Bulletin 85/10**

(45) Publication of the grant of the patent:
**19.10.88 Bulletin 88/42**

(84) Designated Contracting States:
**DE FR GB NL**

(56) References cited:
**EP-A-0 071 230**
**US-A-2 628 160**
**US-A-3 843 343**
**US-A-3 992 206**
**US-A-4 168 900**

(73) Proprietor: **Corning Glass Works**
**Houghton Park**
**Corning New York 14831 (US)**

(72) Inventor: **Bellman, Robert Herman**
**3551 Hickory Grove Road**
**Big Flats New York (US)**
Inventor: **Borrelli, Nicholas Francis**
**935 W. Water Street**
**Elmira New York (US)**
Inventor: **Morse, David Lathrop**
**River Road**
**Corning New York (US)**
Inventor: **Sachenik, Paul Arthur**
**33 Hazel Street**
**Corning New York (US)**

(74) Representative: **Kyle, Diana et al**
**ELKINGTON AND FIFE High Holborn House**
**52/54 High Holborn**
**London WC1V 6SH (GB)**

Courier Press, Leamington Spa, England.

# Description

The invention relates to a method of making an optical device embodying a glass surface having a raised optical pattern.

Lenticular elements have been molded on both glass and plastic surfaces for various purposes. Thus, such elements perform a light focusing or controlling function in the panels or faces of light integrators and light refractors. They may also function primarily to scatter ambient light, as in projection screens and in cathode ray tubes.

Optical devices, such as just described, tend to exert a single optic effect, e.g., refracting or bending light rays which strike the element. The devices embody no imaging capability or concept. In general, the molded elements are rather large. Further, they do not normally require critical attention to precise accuracy such as required for image transmission in a photocopier for example.

Recently, it has been proposed to produce a strip lens array by molding a plurality of tiny microlenses on a plastic surface. The microlenses would be molded in rows and columns on two parallel plastic lens plates. With proper attention to spacing, lens size and other factors, a very compact and efficient imaging device could be produced.

As used herein, the term "array" refers to arrangements of lenses in a pattern regardless of the number of rows and/or columns involved. A single row may be referred to as either a "linear array" or a "strip lens".

If lens arrays are to be used for imaging purposes, it becomes necessary to isolate light channels between opposed lenses and thereby eliminate "crosstalk". This poses a serious problem in an integrally molded device.

The possibility of creating a strip lens by grinding and polishing individual glass or plastic rods has been recognized. The individual cylinders would then be arranged in a pattern and bonded in a fixed relation. However, the extreme problems of production and alignment have also been recognized.

Accordingly, a currently commercial imaging device relies on optical effects generated by an array of minute surfaces, each having a defined gradient refractive index distribution. The array is produced by bundling a configuration of optical fibers wherein each fiber has a defined gradient index distribution imparted thereto as by ion exchange or material impregnation.

United States Patent No. 4,168,900 (Adachi) describes an erect optical imaging system for copying apparatus comprising a first pair of array sets of object lenses and a second pair of array sets of relay lenses spaced from and aligned with the first pair, the first pair producing a real image and the second set producing an erect image. In each pair, one array is offset relative to the other. The lenses are square bars of glass or plastic that are 2 mm on a side.

United States Patent No. 3,605,593, reissued as No. 28.162 (Anderson), discloses an optical imaging apparatus embodying a pair of mosaics having lens arrays which image small portions of an object into a larger composite image.

Such an apparatus is further discussed by Anderson in an article entitled, "Close-Up Imaging of Documents and Displays with Lens Arrays", in the 15 February 1979 issue of *Applied Optics*, Vol. 18, No. 4.

United States Patent No. 3,544,190 (Moorhusen) also discloses an apparatus for forming a continuous image from an object at 1:1 magnification. A lens strip optical imaging system in this apparatus has a series of individual optical imaging devices with an internal field stop. The lens strips are molded in plastic.

United States Patent No. 2,358,070 (Holmes) discloses a projection screen for displaying optical images. The screen comprises a light transmitting support having a plurality of lenticular elements on one surface for focusing light. A light absorbing layer on the opposite surface has exit pupils to permit passage of focused light.

United States Patent No. 2,670,279 (Szegho et al) and No. 3,114,668 (Guides) described, respectively, a sand blasting and a droplet coating method of producing an array of elements to reduce specular reflection on a cathode ray tube panel.

United States Patent No. 2,628,160 (Stookey) reviews several prior patents disclosing photosensitively opacifiable glasses and describes selectively sculpturing or etching such glasses due to differential etching rates for clear and crystallized glass.

United States Patent No. 3,931,438 (Beall et al.) discloses a laminated article formed with one lamina being a surface layer and the other an interior core. The two laminae are similar chemically and close in coefficient of thermal expansion, but densify to different degrees on cooling, thereby setting up compressive stresses.

United States Patent No. 3,719,462 (Andreatch, Jr. et al.) discloses a means of producing light guide paths in glass by mechanically stressing or densifying the desired path.

According to the present invention there is provided a method of making an optical device, wherein a body of photonucleable, opacifiable glass having opposed surfaces is exposed in selected areas of at least one of its surfaces to actinic radiation to provide selective nucleation therein, and is thereafter heat treated to cause thermal opacification, and thereby differential densification or shrinkage, in the exposed areas, whereby a raised optical pattern is generated on at least one of the opposed surfaces us an integral part of the glass body.

In a preferred embodiment, the method of the invention is used to provide in one integral glass body opposed arrays of microlenses in registry and having cylindrical light paths therebetween.

The invention can be used to provide in a simple fashion an optical imaging device that is small, compact and employs less glass bulk than known devices. The invention thus enables more compact copiers and similar imaging devices to be produced.

As already indicated, a preferred device produced by the method of the invention is an optic imaging device wherein two arrays of microlenses are formed, one on each opposed surface of a photonucleable glass body, the arrays being in registry whereby each microlens on one surface pairs with a corresponding microlens on the opposite surface, and with an intervening, clear, light-transmitting cylinder, to form a system for imaging purposes. In this imaging device, each array of spherical microlenses rises above, and is integral with, a glass surface, each microlens in an array is closely and uniformly spaced from adjacent microlenses and the intermediate matrix glass is substantially opaque.

In preferred embodiments, the microlenses have a diameter of at least 100 μm, preferably 300 μm, and the lens thickness (T) is so related to the lens radius of curvature R and image/object working distance X by the first order approximation formula:

$$T = \frac{n_o X}{n_o - 1} \left[ \frac{R_1}{X - R_1/(n_o - 1)} + \frac{R_2}{X - R_2/(n_o - 1)} \right]$$

($n_o$=glass index of refraction, that a 1:1 erect conjugate image is formed. The lenses on the first surface forms a demagnified relay image inside the clear area, which in effect becomes an object for the second surface lens.

In the one form, the method of the invention comprises, the steps of exposing a surface of a photonucleable, opacifiable glass body to a source of short wavelength radiation, the exposure being through a mask composed of material which transmits the radiation, except for closely-spaced, opaque dots of uniform size arranged in an array corresponding to the desired lens arrays, heat treating the selectively exposed glass to develop opacifying crystallites in the exposed areas and to cause densification of said crystallite containing network, whereby the array of unexposed areas is drawn into an array of spherical lenses.

In the accompanying drawings,

Figure 1 schematically illustrates a lens system formed in glass by selective densification in accordance with the invention,

Figure 2 is a magnified surface profile trace of a typical microlens made in accordance with the invention,

Figure 3 is an enlarged view in cross-section illustrating selected light paths in an imaging device having equal power surfaces and transmitting a 1:1 conjugate image,

Figure 4 is similar to Figure 3, except that the device has unequal power surfaces,

Figure 5 is similar to Figures 3 and 4, but illustrates two devices in tandem with interior field lenses, and

Figure 6 is a magnified top view of a mask having a negative dot pattern.

The present invention is based on observations regarding behavior of a photonucleable, opacifiable glass as such glass is opacified. It has been observed that the glass undergoes densification during thermal opacification. More importantly, it has been observed that, when such a glass body is selectively exposed to activating, short wavelength radiation, the exposed portions tend to densify while the unexposed portions do not. Hence, the exposed regions undergo shrinkage. This exerts a radial compressive force on the unexposed regions of soft glass thereby drawing them into a raised pattern with smooth curved surface. The raised pattern will assume a condition of minimum energy whereby, for example, a circular unexposed region will be drawn into a spherical shape due to surface tension.

These observations led to the perception that a raised optical pattern could be formed in a glass surface by controlled, selective exposure of an opacifiable glass. The pattern may take any desired geometrical form, but is described in terms of microlens arrays because of commercial interest therein. The lenses that may be formed are extremely small in size. For example, in a typical array, where each lens has a 200 μm diameter and adjacent lenses are on 300 μm centers or axes, a 50 mm×50 mm (two inch square) glass surface may have 28,900 microlenses formed thereon.

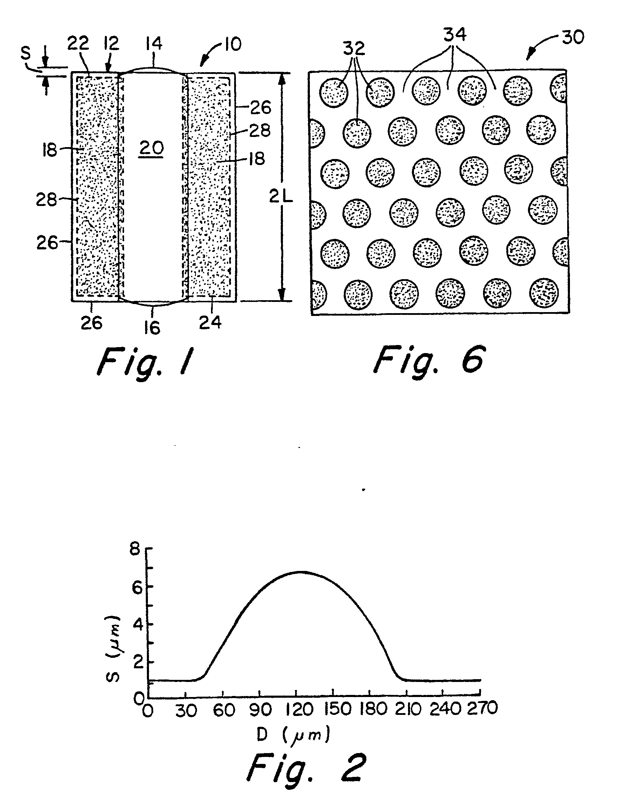

Such pattern development is schematically illustrated in Figure 1 which shows a single lens system 12 formed in a flat strip 10 of photonucleable, opacifiable glass. Lens system 12 embodies spherical microlenses 14 and 16 which form as raised optical elements on opposite surfaces of glass body 10. The microlens patterns forms as zone 18 of the glass contracts due to differential densification between the opacified zone 18 and the clear zone constituting lens system 12.

Lens system 12 consists of a clear, light-transmitting, cylindrical zone 20 and micro-lenses 14 and 16 on the respective surfaces 22 and 24 of the glass body. Zone 20 is surrounded by, and optically insulated by, continuous matrix 18 which is opacified. Thus, matrix 18 has been exposed to radiation which nucleated the glass and permitted crystal growth on heat treatment. Coincident with the crystal growth, the glass became denser and shrunk below the level of the unexposed, and hence unopacified, cylindrical zone 20.

In Figure 1, solid lines 26 indicate original glass boundaries, whereas dotted lines 28 indicate the corresponding boundaries after densification. In dimensional markings, S is the lens height, that is the extent to which the lens extends above matrix 18; 2L is the glass thickness or length of cylindrical zone 20 between microlenses 14 and 16; D is the lens diameter. These values are related in this manner:

$$\frac{S}{L} = \frac{1-\rho_o/\rho_f}{3-\rho_o/\rho_f}$$

where $\rho_o$ is original glass density and $\rho_f$ is the final or opacified glass density. The radius of curvature of a lens is given by:

$$R = \frac{D^2}{8S}$$

The arrangement illustrated in Figure 1 is particularly beneficial where the optical pattern forms an array of lens systems. Then, the opacification of zone 18 not only causes formation of the lenses 14 and 16; it also provides the opaque separators or barriers vital to preventing "cross talk" between lens systems in an array.

As noted earlier, a particular utility for lens arrays is an optical imaging device such as used in photocopiers. A lens array in accordance with the present invention provides several important advantages for this purpose. One such advantage is that the number of lenses that can be produced in one simple operation is practically limitless. Further, the lenses can be made very small, while still retaining a high degree of uniformity.

The importance of minimizing lens size may be seen from the fact that the power of the lens is given by the expression $R/n-1$ where R is the radius of curvature of the lens. This is directly related to the square of the lens diameter by the expression

$$\frac{D^2(n_o-1)}{R}$$

where D is the lens diameter and the expression is a constant. Therefore, it is frequently desirable to minimize the lens diameter. Such reduction is important in economically reducing the size of imaging devices and apparatus such as photocopiers. Currently, mirror systems are frequently used to accommodate long light paths in small space. These add to both the complexity and the cost of the apparatus.

Another factor of considerable concern is uniformity of illumination. This is another area where the flexibility in the rows and columns of an array can provide superior results to a device limited to one or two linear arrays.

Lens height is dependent on degree of exposure of the glass to short wavelength radiation and to subsequent thermal treatment. Where the glass is exposed on one surface only, the lens height on the opposite unexposed surface may be essentially the same as that on the exposed surface in a thin glass sample. As thickness increases above about two mm a differential tends to occur and to become greater with thickness. In any event, the lens height does not usually exceed about 20 μm, much less than the lens diameter.

It is possible to maintain essentially equal lens height in glass of greater thickness if one exposes the glass sample from both faces. The respective masks and equipment must be arranged in very close registry. Then each side is given an equal degree of exposure. While this procedure has been successfully employed, it is very difficult and time consuming to carry out.

As indicated, it is usually desirable to maintain as small a lens diameter as possible, consistent with other requirements. However, accuracy and uniformity of both lens curvature and lens size become increasingly difficult to maintain as size is decreased. Hence, a diameter of about 100 μm is a practical minimum and a diameter of about 300 μm is preferred. The upper limit on size is governed primarily by the optics requirements in any given situation. Normally, about 500 μm is a practical upper limit, although larger lenses can readily be produced.

Figure 2 of the drawing shows a magnified surface profile trace of a single microlens in a lens array. In addition to overall magnification, the height and breadth are exaggerated relative to each other for illustration purposes. Thus, in the graphical illustration, units along the horizontal axis equal 30 μm, whereas units along the vertical axis are in microns. Thus, the lens may be considered as greatly condensed laterally, or greatly expanded vertically, to show the shape and spacing.

Thus far, the imaging device has been considered only in terms of a single pattern or array of spheres formed on and integral with a glass surface. For image transmitting purposes, however, the device may be considered as an array of lens systems constituted by elongated cylinders extending through a glass body between microlenses on opposite surfaces.

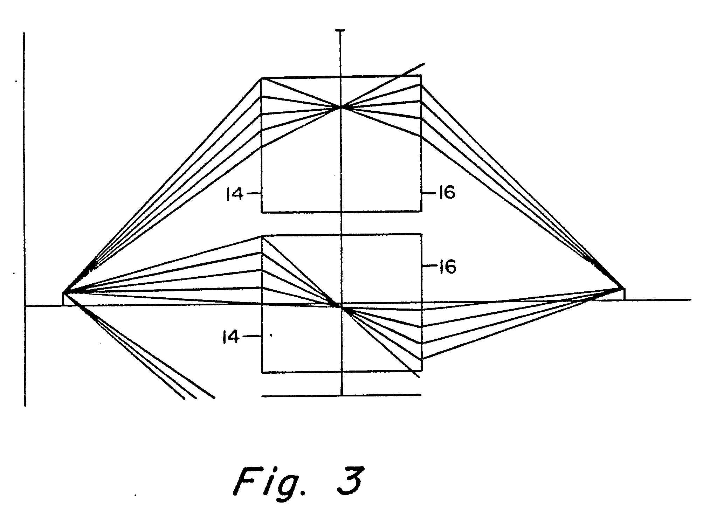

A particular application utilizes the fact that a 1:1 erect conjugate image can be transmitted by controlling the optic characteristics of the device. This is illustrated schematically in Figures 3, 4 and 5.

As illustrated in Figure 1, lenses 14 and 16 are formed on the front and back surfaces, respectively, of glass plate 10. The two surfaces may exhibit equal power lenses, but will usually differ, especially if initial exposure is directed to one side of glass plate 10. The possibility of having one-to-one erect imaging depends on the radius of curvature of the front and back lenses, and on the separation between the lens arrays.

In a single piece device having equal power surfaces, such as schematically shown in Figure 3, one may formulate an approximate relationship for conjugate imaging as,

$$T = \frac{2n_oX}{n_o-1} \cdot \frac{R}{X-R/(n-1)}$$

where:
R=radius of curvature of the lens
$n_s$=glass index of refraction

T=thickness of the imaging device
X=image distance.

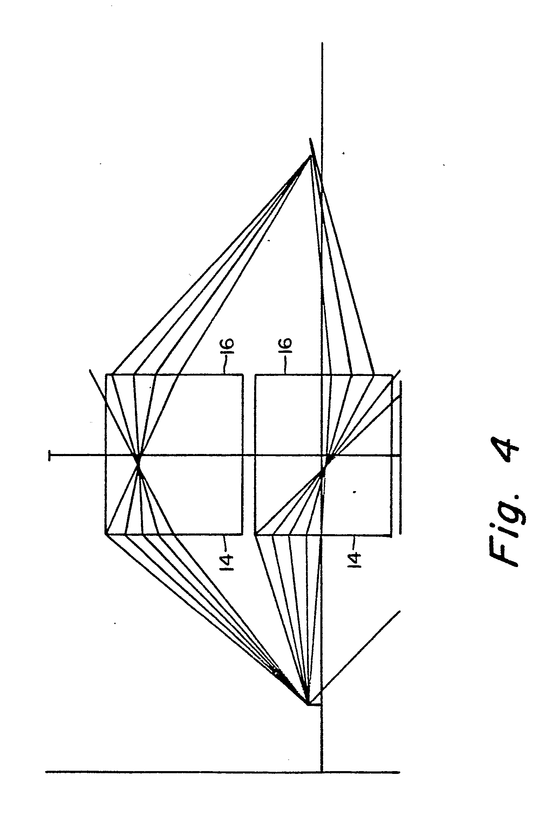

Similar relationship may be developed for the situation where a single piece device has different power surfaces. This situation is illustrated in Figure 4. The corresponding formula for conjugate imaging here is,

$$T=\frac{n_oX}{n_o-1}\left[\frac{R_1}{X-R_1/(n_o-1)}+\frac{R_2}{X-R_2/(n_o-1)}\right]$$

A single-piece imaging device, such as illustrated in Figures 3 and 4 is a preferred form because of simplicity of production. However, unless one employs a dual exposure system as noted earlier, this requires exposure through the body by the activating radiation. In turn, that tends to limit the thickness of the glass body employed.

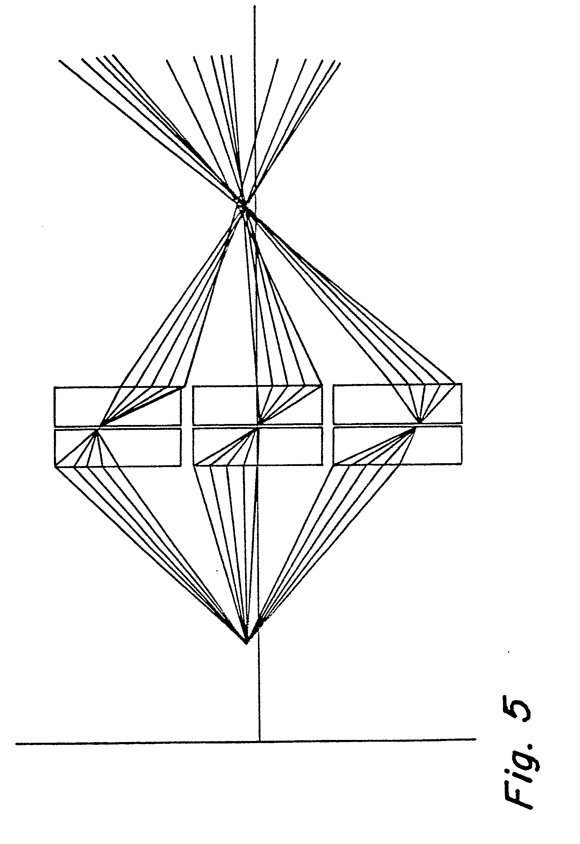

This situation can be resolved by forming individual devices and then stacking these to achieve the desired device thickness. Such an arrangement of two devices is schematically illustrated in Figure 5 wherein designations of dimensions correspond to Figures 3 and 4.

In preparing such a composite device, the individual bodies are first developed as single-piece devices. That is to say the glass bodies are selectively exposed through a multi-aperture mask and heat treated to differentially densify the body and develop the microlens pattern. The single-piece bodies are then placed in registry and corresponding lens systems accurately aligned as by maximum light intensity equipment.

It is recognized that a preferred condition is to have lens of equal power on both the entrance and exit side of a system. It is also customary to expose a glass body from one surface only, this being known as the "front surface". In a dual stack then, for example, we arrange the bodies so that both outward facing, or exposed, surfaces are "front surfaces".

It will be appreciated that the microlenses on the outside surfaces are the only ones that are directly involved in imaging. The inside, or facing, lenses serve no direct function and could be removed if desired. They may, however, serve indirect purposes, and we prefer to leave them on the devices.

One very significant function served by the inside lenses is that of a field lens. Light rays, which are at such an angle as to otherwise be lost, may be bent back by these interior lenses as illustrated in Figure 5. Thus, the lowest, or outside ray in each group of traces might be lost, except for the indicated field effect. This provides improved brightness.

It is of course necessary to align the two or more devices. However, light beam equipment is available which adjusts such devices to a maximum transmission value and then locks them in position for sealing or other unification procedure.

Accuracy of spacing and centering the micro-lenses in an array, as well as in maintaining their spherical surface, is extremely important in order to obtain a clear, undistorted image. The literature has noted the great skill and long and troublesome labor required to obtain microlenses by grinding and polishing, as well as subsequent alignment.

The present invention provides a simple, inexpensive procedure for producing the desired integral lens array. Basically, the inventive method utilizes a physical phenomenon observed to occur when a photosensitively opacifiable glass is selectively opacified.

Stookey observed, and his U.S. Patent No. 2,628,160 was based on such observation, that the opacified and clear areas in a selectively opacified photosensitive glass are rendered differentially etchable, whereby filigrees and other etched patterns are produced. It has now been observed that differential densification of the glass occurs during the photosensitizing and crystal-forming process. Thus, the crystal-containing areas tend to contract and become denser. The crystal-free areas do not undergo change, and hence do not contract. The result is a potential for producing an optical pattern in a glass surface by controlled formation of a physically raised pattern having an unbroken surface.

We have now found that the nature of this relief image may be controlled by controlling the initial radiation exposure of the glass. More specifically, we employ an otherwise transparent mask having a pattern of opaque dots corresponding to a desired lens array. Thus, the mask is transparent to the activating actinic radiation, except for the pattern of opaque dots.

When the glass is exposed through such mask, the exposed zones become nucleated. Meanwhile, the cylindrical zones under the opaque dots remain unexposed, and hence unnucleated. The glass is then heat treated in the usual manner to cause crystal growth in the exposed areas. This causes the exposed glass to contract and draw away from the uncrystallized cylindrical zones. Surface tension causes the transparent protrusions to assume spherical shapes and to appear as raised spherical surfaces with interstitial valleys.

Any photosensitively opacificable glass may be employed. Included are the several glass composition families discussed in the Stookey patent, and that patent is incorporated herein for its teaching. The crystal phases are lithium disilicate and metasilicate, barium disilicate and alkali metal fluoride. The lithium silicate glasses are commercially available and provide a substantial crystal formation. Hence, they have been primarily used in the studies hereafter reported.

A photosensitively opacifiable glass, available from Corning Glass Works under Code No. 8603, was employed in the studies described below. This glass has the following composition as calculated in parts by weight on an oxide basis:

| | |
|---|---|
| $SiO_2$ | 79.1 |
| $Li_2O$ | 9.4 |
| $Na_2O$ | 1.6 |
| $K_2O$ | 4.2 |
| $Al_2O_3$ | 4.2 |
| ZnO | 1.0 |
| $Sb_2O_3$ | 0.4 |
| Au | 0.0012 |
| Ag | 0.115 |
| $CeO_2$ | 0.015 |
| SnO | 0.003 |

Three 50 mm×150 mm (2″×6″) strips of this glass were cut from a rolled sheet 1.5 mm in thickness. Additional strips of varying thickness were cut from other rolled sheets.

One face of each strip was covered with a mask having a negative dot pattern as shown in exaggerated dimensions in Figure 6. Having reference to Figure 6, mask 30 has an array of dots 32 that are uniform in size and in spacing. These dots are opaque to actinic radiation such as emitted by a mercury arc lamp. Portions 34 of mask 30, intermediate dots 32, are essentially transparent to the radiation.

Three masks were provided, each with opaque dots differing in size from the others. Thus, the diameters of dots 32 where, respectively, 150, 200 and 300 μm. Each masked glass sample was exposed through its mask to radiation from a Hanovia 435 watt mercury arc lamp positioned about 380 mm (15 inches) from the masked glass. Exposure time was 100 seconds.

Subsequent to exposure, the samples were heat treated between the annealing and softening temperatures of the glass in accordance with standard photosensitive glass processing practice. Thus the samples were heated to 540°C, held to permit nucleation, then heated to 580°C, and held to permit crystal growth.

Each of the samples was observed to have a series of spherical bumps or protrusion at both the exposed surface and the opposite surface. A surface profile trace, such as shown in Figure 2, was made on each sample to demonstrate sphericity of the lens developed, as well as permit determination of dimensions. Optical studies showed the capability of the spherical bumps to act as microlenses, the quality depending on the spherical quality of the lens surface.

Measurements showed the lens height, resulting from the 100 second exposure, to be 8.6 μm. This value was obtained with each of the mask dot sizes. A further set of samples was given identical treatment, except for a 75 second exposure. In this case, lens height was found to be 6.8 μm.

Density measurements show that the microlenses were formed at a density ratio of about 1.01. Thus, the clear, uncrystallized glass, as originally melted and as found in the image-transmitting, cylindrical channels, had a density of 2.36. After exposure and heat treatment, the crystallized glass had a density of 2.38.

It has been previously stated that lens power, as measured by the lens radius of curvature, depends on lens diameter and on glass thickness. The heat treatment employed for crystallization may also influence the value.

To illustrate various influences on this value, variations were made in heat treatment following exposure, in glass (and hence lens system) thickness, and in lens diameter as determined by dot size in the masks employed. The data for these determinations are shown in the table below.

Throughout the table, the radius of curvature (R) in each case is given in mm for both the front and back surface lens elements. Exposure was from the front surface, and was held constant. Heat treatment is shown in degrees C/minutes hold. Sample thickness is in mm and lens diameter in microns. In the heat treatment set of samples, lens diameter, as determined by mask dot size, was 300 μm; in the thickness variations, a 200 μm diameter dot size was employed in each case. In the heat treatment set of samples, glass thickness was 2 mm, while 3 mm thick glass was used in the samples where lens diameter was varied.

### TABLE
#### R (mm)

| Front | Back | Heat Treatment |
|---|---|---|
| 1.1 | 2.0 | 570°C/60′ |
| 0.95 | 1.75 | 580°C/60′ |
| 0.75 | 0.85 | 590°C/60′ |

| Front | Back | Thickness |
|---|---|---|
| 0.4 | 0.7 | 2 mm |
| 0.37 | 0.7 | 3 mm |
| 0.33 | Infinite | 4 mm |

| Front | Back | Lens Diameter |
|---|---|---|
| 0.46 | 1.18 | 200 μm |
| 0.70 | 1.30 | 300 μm |
| 1.15 | 1.65 | 400 μm |
| 1.84 | 2.60 | 500 μm |

A particular feature of the present lens arrays is their ability to form a 1:1 erect conjugate image wherein each lens contributes light to a single image. The effect is schematically illustrated in Figures 3, 4 and 5.

The relationship between the lens array thickness, the radius of curvature of the lenses and the image-to-object distance has been found to be expressed by the formulae earlier set forth relative to Figures 3, 4 and 5 where x is the object distance, R is the radius of curvature and $n_0$ is the refractive index of the clear glass. One can then design any desired conjugate distance by suitably choosing the radius of curvature for the lens and the lens thickness. Radius of curvature is a function of and controlled by parameters as outlined above.

Claims

1. A method of making an optical device, wherein a body (10) of photonucleable, opacifiable glass having opposed surfaces (22, 24) is exposed in selected areas of at least one of its surfaces to actinic radiation to provide selective nucleation therein, and is thereafter heat treated to cause thermal opacification, and thereby differential densification or shrinkage, in the exposed areas, whereby a raised optical pattern (14, 16) is generated on at least one of the opposed surfaces as an integral part of the glass body (10).

2. A method in accordance with claim 1, wherein the optical pattern is an array of spherical microlenses (14, 16).

3. A method in accordance with claim 2, wherein each microlens (14, 16) is closely and uniformly spaced from adjacent microlenses.

4. A method in accordance with claim 1, wherein each of the opposed surfaces (22, 24) has a similar raised pattern formed therein.

5. A method in accordance with claim 4, wherein each raised optical pattern is an array of spherical microlenses (14, 16), the lens arrays being in register on the opposite surfaces 22, 24), and further comprising internal light transmitting cylinders (20) connecting each pair of opposed lenses (14, 16), the intermediate matrix (18) being substantially opaque.

6. A method in accordance with claim 5, wherein the microlenses (14, 16) have a diameter of at least 100 µm.

7. A method in accordance with claim 6, wherein the microlenses (14, 16) have a diameter of from 100—500 µm.

8. A method in accordance with any one of claims 4 to 7, wherein the overall lens thickness T is related to the radius of curvature R of the lens and image-object distance X by the formula

$$T = \frac{2n_o X}{n_o - 1} \cdot \frac{R}{X - R/(n_o - 1)}$$

($n_o$ = glass index of refraction) whereby a one-to-one erect conjugate image may be formed.

9. A method as claimed in any one of claims 1 to 7, having at least two glass bodies rigidly maintained in a stacked relationship such that each lens system in one body is in registry with a corresponding lens system in an adjacent body, whereby the device has the effective thickness for imaging purposes of the two or more bodies.

10. A method in accordance with claim 9, wherein the exposed lens arrays on the outer surfaces of the composite assembly have substantially the same lens power.

11. A method in accordance with claim 9, wherein there are internal, facing lens arrays in the composite which function as field lenses.

12. A method in accordance with any one of claims 2, 3, 5, 6, 7 and 8 wherein selective exposure is achieved by covering at least one of said surfaces (22, 24) with a mask (30) that is transparent to actinic radiation except for a negative dot pattern (32) corresponding to the desired lens array and exposing the masked glass to actinic radiation.

13. A method according to claim 12, wherein each of two opposed glass surfaces (22, 24) is covered with an identical dot-pattern mask (30), the two masks and exposure sources are assembled in registry, and the glass is alternately exposed from each side, whereby lenses (14, 16) of equal power develop upon heat treatment.

14. A method according to any preceding claim, wherein the glass has a substantial lithium content and the specified areas comprise crystals of lithium metasilicate and/or lithium disilicate.

15. A method according to any preceding claim, wherein the heat treatment is carried out in the range of 500 to 600°C to cause growth of opacifying crystals in the exposed portions.

**Patentansprüche**

1. Verfahren zur Herstellung einer optischen Einrichtung, bei dem ein Körper (10) aus photokeimbildendem, trübungsfähigem Glas mit einander gegenüberliegenden Oberflächen (22, 24) in bestimmten Gebieten wenigstens einer ihrer Oberflächen einer aktinischen Strahlung ausgesetzt wird, um eine selektive Keimbildung darin hervorzurufen, wonach der Körper wärmebehandelt wird, um eine thermische Opazität und dadurch eine unterschiedliche Verdichtung oder eine Schrumpfung in den exponierten Gebieten zu verursachen, wodurch ein erhabenes optisches Muster (14, 16) auf wenigstens einer der einander gegenüberliegenden Oberflächen als ein integrales Teil des Glaskörpers (10) erzeugt wird.

2. Verfahren nach Anspruch 1, bei dem das optische Muster eine Anordnung von sphärischen Mikrolinsen (14, 16) darstellt.

3. Verfahren nach Anspruch 2, bei dem jede Mikrolinse (14, 16) von den benachbarten Mikrolinsen end und gleichförmig beabstandet ist.

4. Verfahren nach Anspruch 1, bei dem die einander gegenüberliegenden Oberflächen (22, 24) ein darin ausgebildetes ähnliches erhabenes Muster aufweisen.

5. Verfahren nach Anspruch 4, bei dem jedes erhabene optische Muster eine Anordnung von spärischen Mikrolinsen (14, 16) darstellt, wobei die Linsenanordnungen bzw. Linsenreihen sich mit den gegenüberliegenden Oberflächen (22, 24) decken, wobei weiterhin interne Licht übertragende Zylinder (20) vorgesehen sind, welche jedes Paar von einander gegenüberliegenden Linsen (14, 16) miteinander verbinden, wobei die mittlere Matrix (18) im wesentlichen opak ist.

6. Verfahren nach Anspruch 5, bei dem die Mikrolinsen (14, 16) einen Durchmesser von wenigstens 100 µm aufweisen.

7. Verfahren nach Anspruch 6, bei dem die Mikrolinsen (14, 16) einen Durchmesser von 100 bis 500 µm aufweisen.

8. Verfahren nach einem der Ansprüche 4 bis 7, bei dem die Gesamtlinsenstärke T zum Krümmungsradius R der Linse und die Bild-Objekt-Distanz durch die nachfolgende Gleichung in Beziehung steht,

$$T = \frac{2n_o X}{n_o - 1} \cdot \frac{R}{X - R(n_o - 1)}$$

$n_o$=Glasbrechungsindex);

wobei ein 1:1 umgekehrt konjugiertes Bild erzeugt werden kann.

9. Verfahren nach einem der Ansprüche 1 bis 7, bei dem wenigstens zwei Glaskörper starr belassen werden in einer aufeinander gestapelten Beziehung, so daß jedes linsensystem in einem Körper sich mit dem entsprechenden Linsensystem des benachbarten Körpers deckt, wobei die Einrichtung eine effektive Stärke für Abbildungszwecke von zwei oder mehr Körpern aufweist.

10. Verfahren nach Anspruch 9, bei dem die exponierten Linsenanordnungen bzw. Linsenreihen auf den äußeren Oberflächen der Verbundeinheit im wesentlichen die gleiche Linsenstärke aufweisen.

11. Verfahren nach Anspruch 9, bei dem innere einander gegenüberliegenden Linsenanordnungen bzw. Linsenreihen in der Verbundeinheit vorgesehen sind, die als Feldlinsen fungieren.

12. Verfahren nach einem der Ansprüche 2, 3, 5, 6, 7 und 8, bei dem eine selektive Belichtung durch Abdecken wenigstens einer der Oberflächen (22, 24) mit einer Maske (30) erreicht wird, die gegenüber der aktinischen Strahlung transparent ist mit Ausnahme eines negativen Punktmusters (32), das der gewünschten Linsen-. anordnung entspricht und das maskierte Glas mit der aktinischen Strahlung belichtet.

13. Verfahren nach Anspruch 12, bei dem jede der beiden einander gegenüberliegenden Glasoberflächen (22, 24) mit einer identischen ein Punktmuster aufweisendem Maske (30) abgedeckt wird, die beiden Masken und die Belichtungsquellen deckungsgleich zusammengebaut sind und das Glas abwechselnd von jeder Seite belichtet wird, wodurch sich Linsen (14, 16) gleicher Stärke aufgrund der Wärmebehandlung entwickeln.

14. Verfahren nach einem der vorangehenden Ansprüche, bei dem das Glas einen wesentlichen Gehalt an Lithium aufweist und die spezifizierten Gebiete Kristalle aus Lithiummetasilikat und/oder Lithiumdisilikat enthalten.

15. Verfahren nach einem der vorangehenden Ansprüche, bei dem die Wärmebehandlung im Bereich von 500 bis 600°C ausgeführt wird, um diffus streuende Kristalle in den exponierten Bereichen wachsen zu lassen.

## Revendications

1. Un procédé de fabrication d'un dispositif optique, dans lequel un corps (10) de verre opacifiable susceptible de photonucléation, comprenant des surfaces opposées (22, 25), est exposé à un rayonnement actinique en des régions prédéterminées de l'une au moins de ses surfaces pour en réaliser une nucléation sélective, et est ensuite traité thermiquement pour provoquer une opacification thermique, ainsi une densification ou un retrait différentiel, dans les régions exposées, de sorte qu'un motif optique saillant (14, 16) est créé sur l'une au moins des surfaces opposées en tant que partie intégrante du corps de verre (10).

2. Un procédé selon la revendication 1, dans lequel le motif optique est un réseau de microlentilles sphériques (14, 16).

3. Un procédé selon la revendication 2, dans lequel chaque microlentille (14, 16) est très proche et uniformément écartée des microlentilles adjacentes.

4. Un procédé selon la revendication 1, dans lequel des motifs saillants similaires sont formés sur chacune des surfaces opposées (22, 24).

5. Un procédé selon la revendication 4, dans lequel chaque motif optique saillant est un réseau de microlentilles sphériques (14, 16), les réseaux de lentilles étant en coïncidence sur les surfaces opposées (22, 24), et dans lequel, de plus, des cylindres internes (20) transmettant la lumière relient les lentilles de chaque paire de lentilles opposées (14, 16), la matrice intermédiaire (18) étant sensiblement opaque.

6. Un procédé selon la revendication 5, dans lequel les microlentilles (14, 16) ont un diamètre da'u moins 10 µm.

7. Un procédé selon la revendication 6, dans lequel les microlentilles (14, 16) ont un diamètre de 100 à 150 µm.

8. Un procédé selon l'une quelconque des revendications 4 à 7, dans lequel l'épaisseur totale E de la lentille est liée au rayon de courbure R de la lentille et à la distance image-objet X par la formule

$$E = \frac{2n_o X}{n_o - 1} \cdot \frac{R}{X - R/(n_o - 1)}$$

($n_o$=indice de réfraction du verre), si bien que peut être formée une image conjuguée droite au grandissement 1:1.

9. Un procédé tel que revendiqué dans l'une quelconque des revendications 1 à 7, dans lequel au moins deux corps de verre sont rigidement maintenus en relation d'empilement de telle manière que chaque système de lentilles d'un corps se trouve en coïncidence avec un système de lentilles correspondant d'un corps adjacent, si bien que le dispositif possède, à des fins de formation d'image, l'épaisseur effective de deux ou plusieurs corps.

10. Un procédé selon la revendication 9, dans lequel les réseaux de lentilles exposés présents sur les surfaces extérieures de l'assemblage composite ont sensiblement la même puissance.

11. Un procédé selon la revendication 9, dans lequel se trouvent, dans le composite, des réseaux internes de lentilles se faisant face qui agissent comme des lentilles de champ.

12. Un procédé selon l'une quelconque des revendications 2, 3, 5, 6, 7 et 8, dans lequel l'exposition sélective est réalisée en recouvrant l'une au moins desdites surfaces (22, 24) par un masque (30) qui est transparent au rayonnement actinique, excepté en un motif de points négative (32) correspondant au réseau désiré de lentilles, et en exposant le verre recouvert du masque au rayonnement actinique.

13. Un procédé selon la revendication 12, dans lequel chacune des deux surfaces de verre opposées (22, 24) est recouverte par un masque à motif de points identique (30), les deux masques et les sources d'exposition sont assemblés en coïncidence, et le verre est successivement exposé de chaque côté, si bien que des lentilles (14, 16) de puissange égales sont engendrées lors du traitement thermique.

14. Un procédé selon l'une quelconque des revendications précédentes, dans lequel le verre possède une importante teneur en lithium et les régions prédéterminées comprennent des cristaux de métasilicate de lithium et/ou de disilicate de lithium.

15. Un procédé selon l'une quelconque des revendications précédentes, dans lequel le traitement thermique est conduit dans l'intervalle de 500 à 600°C pour provoquer la croissance de cristaux opacifiants dans les parties exposées.

Fig. 1

Fig. 6

Fig. 2

*Fig. 3*

Fig. 4

Fig. 5